# EUROPEAN PATENT APPLICATION

(11) **EP 4 227 078 A2**
(43) Date of publication of application: **16.08.2023**
(21) Application number: 21831132.2
(22) Date of filing: 08.10.2021
(51) Int. Cl.: B30B 1/04, A47J 31/44

(54) **CAPSULE RECYCLING APPARATUS AND PROCESSES**

(30) Priority: 09.10.2020 PT 2020116812
(71) Applicant: FLAMA, FÁBRICA DE LOUCAS E ELECTRODOMÉSTICOS, SA, 3700-727 Cesar (PT)
(72) Inventor: CAMPOS PAULA, Pedro Jorge, 3800-867 Aveiro (PT)
(74) Representative: Zimmermann, Tankred Klaus
(86) International application number: PCT/PT2021/050031
(87) International publication number: WO 2022/075872

(57) **Abstract**

The present invention relates to apparatus (1) and processes for recycling materials in capsules (2) of coffee or similar substances, presenting a rigid and/or semi-rigid capsule envelope in at least one envelope material (A) that confines an edible substance (B), and adapted so that can be used in the preparation of aromatic drinks.

The apparatus (1) presents an envelope (3) that can collect the envelope material (A) and the edible substance (B) and that can be manipulated between a closed (I) and an open (II) position, whereby a first envelope part (31) can be manipulated for compression of capsule (2) and for rotation thereof relative to a central axis (X₁) of apparatus, so that the reliability of opening of the capsule (2) and better separation of its contents is enhanced.

## Description

### Field of Invention

The present invention relates to apparatus and processes for recycling materials used in capsules of beverage precursor substances, in particular in capsules of coffee or similar substances, used in beverage preparation apparatus.

### State of the art

The use of edible substance capsules in the preparation of beverages has been known for some time, and the state of the art includes many solutions of capsules that have an envelope that provides an oxygen and ultraviolet barrier in order to ensure maintenance of organoleptic properties during longer period of time, i.e. longer shelf life.

Capsules thus generally present an envelope that includes at least one envelope material having barrier properties with respect to the external environment.

Moreover, there are also many capsules which, in addition to an envelope material, also include materials with a flow-through, or filter, function inside.

The issue of recycling the materials present in beverage preparation capsules has gained increasing relevance, given the growing use of this type of individual portion in beverage preparation machines, as well as the use of materials that are difficult to recycle, such as for example synthetic materials and metallic materials, such as aluminium, or composite substances of synthetic and metallic materials.

The state of the art includes various solutions relating to apparatus and devices for separating materials present in coffee capsules, and the like.

Document EP 2291312 B1 discloses a capsule handling apparatus having means for opening the capsule package and removing the capsule ingredient, these means being arranged to rotate relative to the fed capsule package and intersect the capsule package. The apparatus further features means for separating the capsule package from the capsule ingredient, means for collecting the open capsule package, and means for collecting the capsule ingredient.

Document FR 2937627 discloses an apparatus to help recycle coffee capsules and which has a piston which can be operated from top to bottom on a top face of a capsule so that it can open this and release the edible substance from its interior, in particular so that it falls into a collection volume below the opening location.

Documents FR 2944420 and FR 2945925 also disclose apparatus of this type, with operating principles generally similar to the one of the previous document, in which case a separating element is provided which removes the capsule envelope material after it has been opened and edible substance is released, and collects it in a second collection volume.

Document EP 3250330 B1 also discloses an apparatus of the type of the present invention, and in which a capsule can be punctured by an element that impinges it on an upwardly and downwardly oriented region.

Document US2019/0047241 A1 discloses an apparatus and method for removing and separating coffee beans from used coffee capsules, said apparatus having a depression cap with a processing piston. The used coffee capsule can be inserted into the delimiting indentation and release collar. Then the depression cap can be placed over it and pressed down. The piston is actuated, inverts the capsule, extracts the coffee and resizes the capsule.

Document EP 2158829 A1 discloses an arrangement for separating the contents and packaging of a capsule, which operates by pressing or punching, including cutting and/or perforating at least a portion of the capsule, and which has a collection for holding the unprocessed capsule in one position, as well as a punching means disposed above the capsule retention and operable so as to impinge the capsule.

Document ES 1241931 U discloses an apparatus of the type of the present invention, having an envelope of cylindrical tubular form comprising a first envelope part in the top region and a second envelope part in the base region of the apparatus, the first envelope part being configured so that it can be manually manipulated to compress an unprocessed capsule retained in an operative part only through a linear movement in a direction parallel to the central axis.

### Description of the invention

The aim of the present invention is to provide an apparatus for separating main materials present in coffee capsules, or the like, including separation and different materials and/or with different final destinations, so that said apparatus has a simpler construction and is operable more efficiently and ergonomically by a user.

This object is solved by the present invention through an apparatus according to claim 1, preferred embodiments being described in the dependent claims.

In particular, the object of the present invention is directed to the separation of solid materials present in capsules with a rigid and/or semi-rigid envelope material, and which can operate by means of displacement of a first envelope part in a only linear movement in a parallel direction to the central axis of the apparatus to a closed position and, optionally, in a rotational movement only in the closed position and of up to one complete rotation around the central axis of the apparatus, with respect to the remainder of the apparatus.

The capsule envelope may have a first material only, or it may have a first and second envelope materials.

The capsule envelope may have a first envelope material, for example a synthetic material, in a container part, and a second material in a lid part.

The capsule may have an envelope material and an edible substance collected inside.

The envelope material can be a metallic material, a plastic material, a composite substance of different materials.

The edible substance may be a beverage precursor substance, for example roast and ground coffee bean, or another substance precursor of an aromatic beverage or other edible product.

The capsule may further contain flow interaction elements within it, such as flow path, pressure retainer, filter, and the like, and any of these elements may be provided in a material other than the envelope material.

The capsule may have a container part and a lid part associated with the container part along a circumferential alignment, for example a rim region of the container part, so that it can confine an individual portion of edible substance within the capsule.

The capsule can have a central axis, in particular a central axis of symmetry.

The capsule may have a capsule height in the direction of the central axis thereof, and a characteristic capsule width measured on a top surface thereof.

The capsule has a reference configuration adapted so that it can be used in a beverage preparation apparatus, the reference configuration corresponding to the configuration of the capsule not processed in the apparatus.

The apparatus may have an envelope that includes at least a first and a second envelope part configured to enclose at least part of an operating part.

The apparatus may have an envelope which extends over the entire outer surface of the apparatus without projections or cavities if it is in a closed position, and at least part of it if it is in an open position.

The apparatus may have an envelope comprising a first part configured in a lid-like form so that it is operable between an open and closed position, and vice versa, and a remaining envelope part including a base region for collection of the edible substance that is expelled out of the capsule.

The apparatus can be manipulated between an open position, where the first envelope part is removed from the remaining apparatus, and a closed position where the first envelope part is in a respective closed position in the remaining apparatus.

The apparatus can be manipulated into an open position where placement of an unprocessed capsule in a placement part is provided.

The apparatus may have an operative part which projects above the remaining apparatus part, and into the volume adjoining by the first envelope part in a closed position.

The apparatus can have an operative part that can be collected inside the first and second envelope parts, in the case of the apparatus in a closed position.

The apparatus may have a central axis which can be aligned with the capsule's central axis when the capsule is placed thereon.

The operative part has a capsule placement portion having the reference configuration, in particular placement of a top surface so that the capsule height extends in a direction parallel to the central axis of the apparatus, and is adapted so that it compresses crushing said reference configuration in the direction of the capsule height, so that a substantially flat configuration results.

The apparatus may have a central axis of symmetry relative to the apparatus envelope.

The apparatus can operate in a direction parallel to the direction of gravity.

According to another inventive aspect, the apparatus can be configured so as to provide the separation of materials or parts of materials operating in at least a direction parallel to the direction of the gravity force, optionally further in a direction transverse to the direction of gravity, in particular as a result of movements in these directions.

The apparatus can be configured so that it provides a capsule opening to separate the edible substance from the envelope material, and that further provides retention of parts within the same, for example flow-interacting elements, with at least one dimension previously defined in order to separate these parts of the edible substance.

The apparatus may include a rupture element in proximity to the operative part placement portion.

The apparatus may include a sieve element disposed between a rupture element and the base region of the inner volume, said sieve element may have a characteristic dimension of up to 3.5 cm, preferably of up to 3 cm. 0 cm.

The apparatus can be configured so that the capsule opening can be operated by means of a linear movement along the direction of the central axis and of at least one rotational movement about the central axis.

The apparatus can be configured so that the first envelope part can be manipulated in a linear movement towards the interior volume relative to the rest of the apparatus.

The apparatus can be configured so that the first envelope part can be manipulated in a rotational movement around the central axis of the apparatus and relative to the rest of the apparatus.

The apparatus can be configured so that all capsule opening movements can be generated manually, in particular with the same hand of the user.

The apparatus can be configured so that the separation of the edible substance from the envelope material can be actuated by the force of gravity.

The apparatus can be configured so that a container part of the capsule is retained in a top region of the apparatus and at least the edible substance, possibly still other contents of the capsule, fall under gravity into the interior volume of the apparatus.

The apparatus may have an operative part that provides placement of the capsule, support for a rupture element thereof, access to the operating volume, and actuation of an additional element for separating materials contained in the capsule.

The apparatus may have a placement portion in a top region of the operative part, configured so that it can pick up a capsule top surface, and having a collar so that it can confine a capsule region laterally.

The apparatus may have a placement portion associated with an operative part, the characteristic dimension of apparatus width not exceeding four times a corresponding characteristic dimension of the placement portion.

The apparatus may have a rupture element operatively associated with the placement portion and is configured to actuate a mechanical rupture of a capsule top surface and thereby provide an opening thereof.

The apparatus may have a tear-off part configured such that it can break, pierce or break at least part of an extension of a top surface portion of the capsule, in particular of a cap part of the capsule.

The apparatus may have a rupture element of an annular-like configuration, having a plurality of projections oriented upwards and which can be retained, preferably detachably, inside a neck-shaped portion of a first operative part of the apparatus.

The apparatus may have a first envelope part, shaped like a lid and so that it can be releasably retained in the remainder of the apparatus, and thereby confine the ruptured element in the event that its operation is not required.

Another object of the present invention is to provide a process for separating the main materials associated with a coffee capsule, or similar edible substance, and which is more ergonomic for a user.

This objective is solved according to the present invention through a process according to claim 14.

The process may include providing a separation apparatus, preferably an apparatus according to any of claims 1 to 13.

The method may include placing a capsule with a top surface portion thereof on a placement portion, in particular in a top region of the apparatus.

The method may include a pressing movement of the capsule on said placing part, followed by a rotational movement of the capsule about the central axis thereof.

The process can include a rotational movement generated on the first envelope part, or on the operative part, so as to act capsule on the rupture element, or to act a scanning portion disposed downstream of the rupture element.

The process may include separating a second and/or a third envelope part in order to access edible substance collected in a base region of the inner volume, or to other elements contained in the capsule and collected in a sieve element upstream of the base region.

Within the scope of the present disclosure, the term "rupture" may be understood to correspond to a mechanical rupture action, including cutting, penetrating, crushing, puncturing, considered individually or in combination, or the like.

### List of Drawings

The present invention will now be described in greater detail based on preferred embodiments thereof, and drawings thereof.

The Figures show:
- Figure 1:: side sectional view of a capsule (2) according to the state of the art, of the type of capsules (2) to be used with an apparatus (1);
- Figure 2:: side elevation view of an embodiment of apparatus (1) according to the present invention, in a closed position (I);
- Figure 3:: top perspective view of the apparatus (1) in a closed position (I);
- Figure 4:: top perspective view of the apparatus (1) in an open position (II), without the first envelope part (31) of the envelope (3);
- Figure 5:: side sectional view in a perspective from underneath of the apparatus (1) in a closed position (I) without operative part (5);
- Figure 6:: perspective view from underneath of side cut of a first envelope part (31) of the envelope (3) of apparatus (1);
- Figure 7:: top perspective view of the apparatus (1) without the first envelope part (31) and with the unprocessed capsule (2) placed in the operative part (5);
- Figure 8:: side sectional view of a capsule (2) in the operative part (5) and in an initial position of compression thereof by a first envelope part (31);
- Figure 9:: top perspective view of the apparatus (1) in an open position (II), without the first envelope part (31);
- Figure 10:: top perspective view of the apparatus (1) without the first envelope part (31) and without the operative part (5);
- Figure 11:: side elevation view of the apparatus (1) without the first envelope part (31) and without a third envelope part (33);
- Figure 12:: side sectional view of a first embodiment of the apparatus (1) in a closed position (I);
- Figure 13:: side sectional view of a second embodiment of the apparatus (1) in a closed position (I);
- Figure 14:: side sectional view and perspective from below of the apparatus (1) in a closed position (I), but without an operative part (5);
- Figure 15:: side sectional view of a third embodiment of the apparatus (1) with disposition of elastic elements (54, 55) and in a closed position (I);
- Figure 16:: partial cut top view of the embodiment of apparatus (1) represented in Figure 15.

### Detailed description of preferred embodiments of the invention

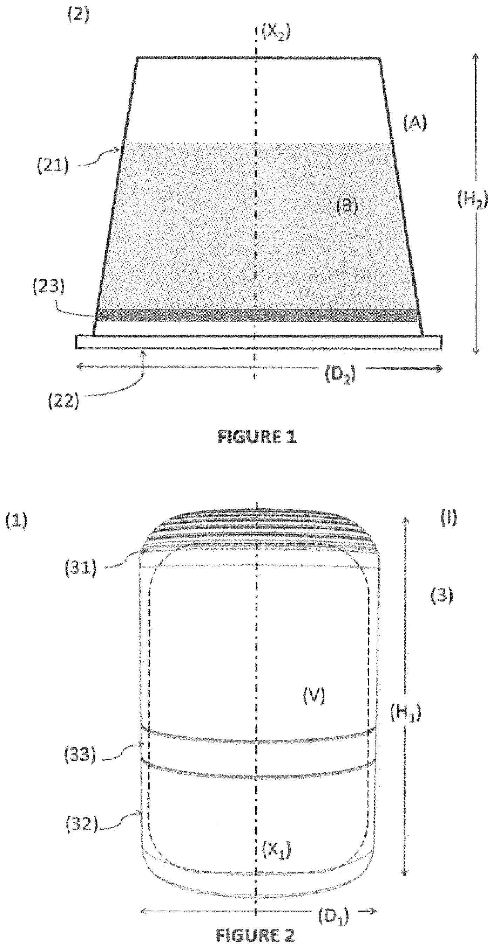

As shown in Figure 1, a type of capsule (2) known in the prior state of the art can have an envelope, or package, comprising a container part (21) and a lid part (22) provided in at least one envelope material (A) and associated with each other so that they can confine an individual portion of an edible substance (B) inside them in a gastight manner.

Examples of envelope materials (A) include metallic materials such as aluminium and synthetic materials, the material of the container part (21) can be different from the material of the lid part (22).

In addition to these components, the capsule (2) can also present at least one complementary element (23) inside, adapted to direct or filter the flow inside.

The edible substance can be roast and ground coffee bean, tea, or other edible substance precursor of an aromatic beverage or other food product.

The lid part (22) generally provides a capsule top surface advantageous for operating a separation of materials associated with the capsule, and that is the embodiment that will be presented in the present disclosure.

The capsule (2) can have a reference configuration with a characteristic height H₂ and a characteristic width D₂, corresponding to the configuration in which it will be processed for separating materials.

Figure 2 represents a side elevation of a preferred embodiment of apparatus (1) according to the present invention, adapted to separate materials associated with used capsules (2).

As the reader will readily recognize, the apparatus (1) serves only the purpose of separating materials associated with used capsules (2), and is not part of a beverage preparation apparatus.

The apparatus (1) presents an envelope (3) configured so that encloses an operating volume (V) that extends with a height H₁ and a characteristic width D₁, both at least approximately similar to that of the envelope (3), preferentially in symmetrical rotation with respect to a central axis (X) of the capsule (2) when placed in the apparatus (1).

Furthermore, the apparatus (1) is adapted so that a portion of the envelope of the capsule (2) can be ruptured, in particular in a top region of the envelope, so that the edible substance (B) can fall under the action of gravity and thereby be collected in a base region of the operative volume (V).

The apparatus (1) can present an envelope (3) that extends along its entire outer part and which encloses the operative volume (V).

In addition, the apparatus (1) presents an envelope (3) that can be manipulated between at an open position (A), wherein it provides access for capsule placement or wherein it provides access for removing materials collected within the operative volume (V), and a closed position (B), and vice versa.

The envelope (3) may include at least a first envelope part (31) comprising the top region and is adapted to enclose a capsule (2), and a second envelope part (32) comprising the base region of the interior volume (V) adapted to collect the edible substance (B).

The first and second envelope portions (31, 32) can be releasably retained in order to provide access to the operative volume (V). In the represented case, the first and second envelope parts (31, 32) are respectively retained on opposite sides of a third envelope part (33) arranged intercalably with respect to the first and second envelope parts (31, 32), so that can be removed individually and singly with respect to the third envelope part (33).

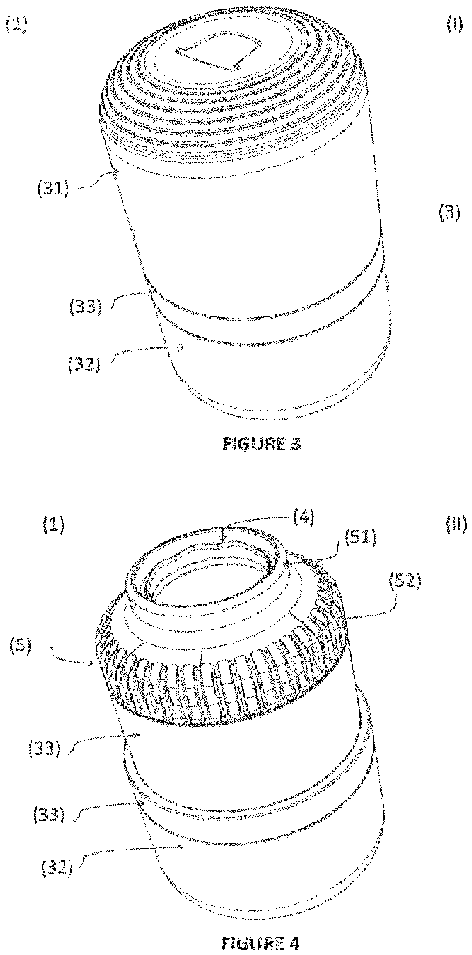

Figures 3 and 4 show the apparatus (1) in a closed position, that is, with the first envelope part (31) placed, and open, that is without the first envelope part (31), so that it is provided access to an operative part (5), respectively.

The operative part (5) presents a placing portion (51) configured so that an unprocessed capsule (2) can be placed therein.

The placing portion (51) can be configured as a tubular-shaped projection relative to the remaining operative part (5), with a characteristic width adapted so that a perimeter region of the capsule (2) can be placed therein close to the top region thereof, and with a rim collar so that the capsule (2) can be advantageously retained laterally.

As shown, the capsule (2) is placed with a top surface thereof retained along a perimeter alignment of the placing portion (51) and so that the central axis (X₂) of the capsule is aligned with the central axis (X₁) of the apparatus.

In the case of this embodiment, the operative part (5) is releasably retained in a third envelope part (33) which is in turn releasably retained by a second envelope part (32) which can collect the edible substance (B) that is separated from the remaining envelope material (A) of the capsule (2).

In particular, the operative part (5) is retained so that can be rotated around the central axis (X₁) of the apparatus.

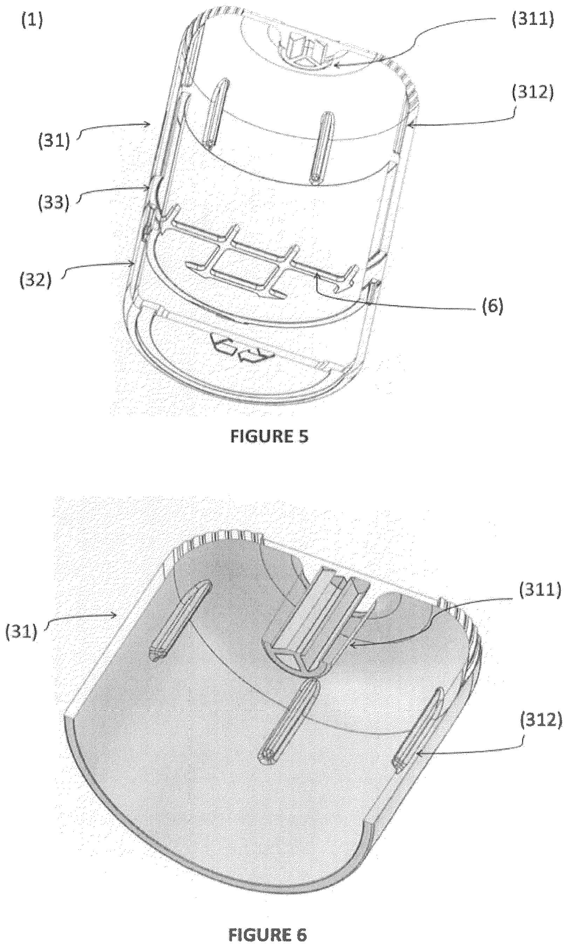

The operative part (5) may further present a plurality of engagement means (52) configured as projections or cavities arranged along an outer perimeter region thereof, adapted so that can engage with corresponding driving means (312) provided on the inner side wall surface of the first envelope part (31) as best seen in Figure 5.

The user can thus carry out the linear compression movement of the capsule (2) against the placing portion (51) and the rupture element (4) retained therein, along a course with an extension similar to, or greater than, the height (H₂) of the capsule (2), and with the aid of driving movement in the final part of the course thereof in the vicinity of and in the closing position (A) provided by said driving means (312) of the first envelope part (31) mechanically engaged with the gear means (52) of the operative part (5).

The reader will of course recognize that the use of the first envelope part (31) having a side wall with a tubular section thus advantageously provides the user with a means more adapted to her hand for exerting the compressive force upon the capsule (2).

Figures 5 and 6 show a side section in perspective of the apparatus (1), without the operative part (5) for ease of observation, and of the first envelope part (31) respectively.

The three envelope parts (31, 32, 33) can confine an operative volume (V), including the operating part (5), whereby said operative volume (V) can collect a first type of material in a sieve element (6) arranged downstream of the operative part (5), and edible substance (B) in a base region downstream of the sieve element (6).

Furthermore, the first envelope part (31) is configured with a tubular portion extending over part of the height (H₁) of the apparatus (1), preferably over at least half of the height (H1), and is adapted so that it can be guided in the direction of the operative volume (V) along the direction of the central axis (X₁), for example telescopically along the operative part (5) and yet another portion of the apparatus (1), in this case of the third envelope part (33).

This configuration thus advantageously provides that a user can place an unprocessed capsule (2) on the operative part (5) and manipulate the first envelope part (31) to compress the latter, the capsule (2) being at least partially confined by the first envelope part (31), and the movement being supported by the form-fit connection thereof with another apparatus part (1), in linear movement until reaching a closed position (I).

This configuration thus provides better ergonomics for the transmission application of compression force, as well as less risk that the capsule (2) may be inadvertently projected laterally out of the position of placement in the operating part (5) .

As best seen in Figure 6, the first envelope part (31) can present a compression portion (311) configured as a projection extending from a central region of the inner surface of the first envelope part (31) and along the central axis (X₁), for example cylindrical or frusto-conical in shape, with a characteristic width smaller than the characteristic width of the unprocessed capsule (2), and extending at least approximately to the level from the top region of the operative part (5), preferably down to the top region of the operative part (5) through a placing portion (51) thereof, in case the first envelope part (31) is in the closed position (I).

Furthermore, the first envelope part (31) can present gear means (312) configured so that they can engage with corresponding engagement means (52) provided on the operative part (5).

The apparatus (1) may further include a sieve element (6) disposed in the operating volume (V) downstream of the operative part (5) and the rupture element (4), and upstream of the base region of the envelope (3), said sieve element (6) being configured in the form of a mesh, or similar, with a characteristic dimension of the passage spaces of that mesh greater than an average characteristic dimension of the edible substance (B), or of the pieces of dregs resulting from the extracting the former, so that the latter can fall more easily through the sieve element (6).

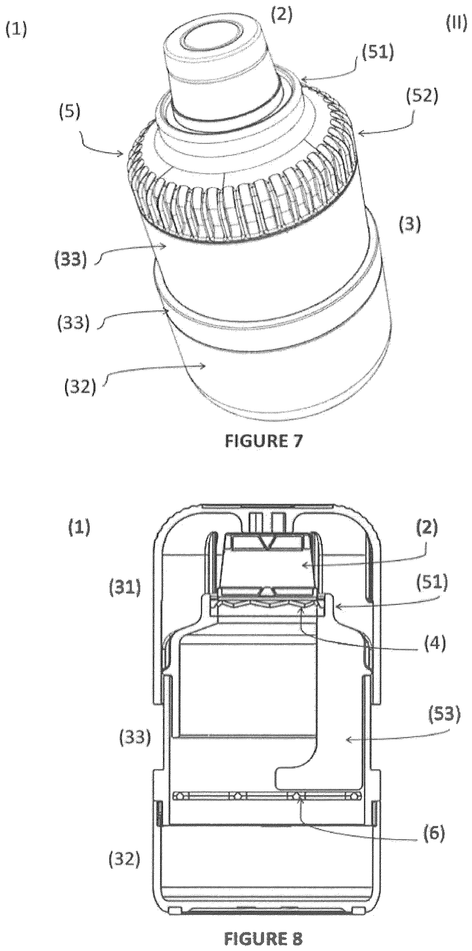

Figures 7 and 8 show the placing of an unprocessed capsule (2) in a placing portion (51) in the operative part (5), and the application of a compressive force thereon through the first envelope part (31).

The materials separation process with the apparatus (1) thus includes removing the first envelope part (31) from the remaining envelope (3), placing unprocessed capsule (2) on the placing portion (51) of the operative part (5), applying the first envelope part (31) on. Then, the user can manipulate this first envelope part (31) in a linear movement along the central axis (X₁) of the apparatus, thereby pushing the capsule (2) against the placing portion (51) and in particular against a rupture element (4) retained therein, so that a mechanical rupture of the top face of capsule (2) oriented towards the operative volume (V) and the expulsion of the contents thereof, including the edible substance (B), so that the content falls under gravity to the operative volume (V).

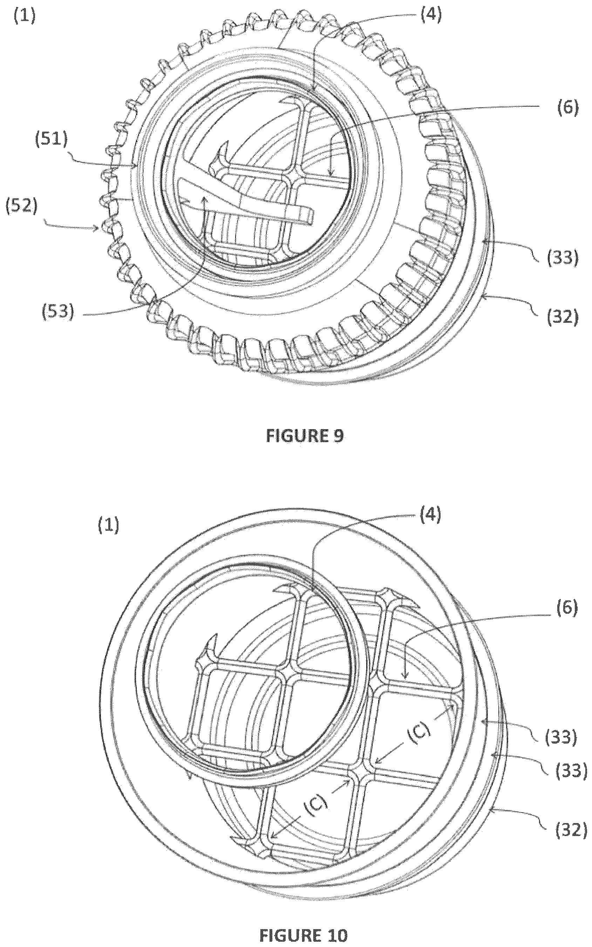

Figures 9 and 10 represent views of the interior of the apparatus (1), with and without the operative part (5), respectively.

The operative part (5) presents a placing portion (51) in which a rupture element (4) is arranged so that can generate mechanical rupture of the envelope material (A) of capsule (2).

The rupture element (4) can be provided as a metallic piece, with a characteristic width similar to that of the top surface of the capsule (2) and presenting a plurality of projections towards the outside of the operative volume (V) along the perimeter of the same.

The operative part (5) may further have a scanning element (53) adapted so that it extends over at least part of the diameter of the operating volume (V) in the region adjacent upstream of the sieve element (6), and which may be rotated together with the operative part (5), optionally by means of rotation by the user of the first envelope part (31) and transmission of this rotational movement to the scanning element (53) .

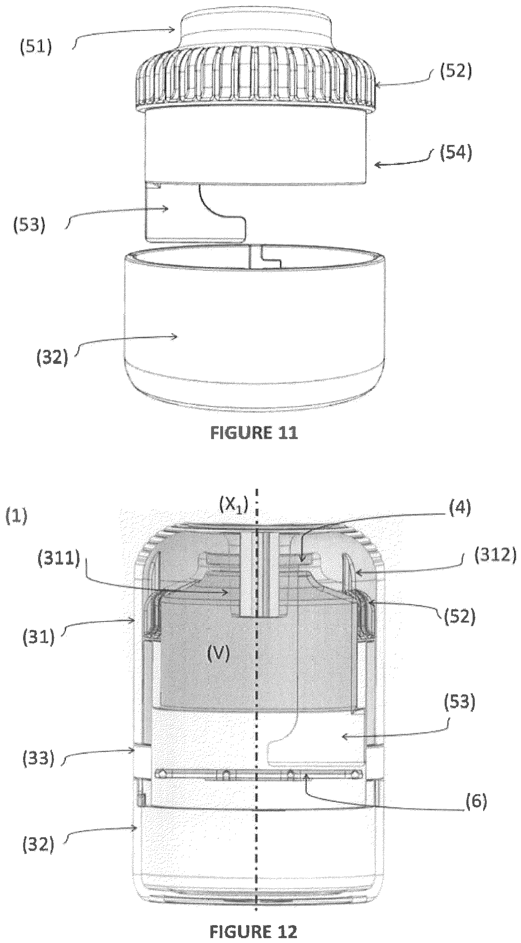

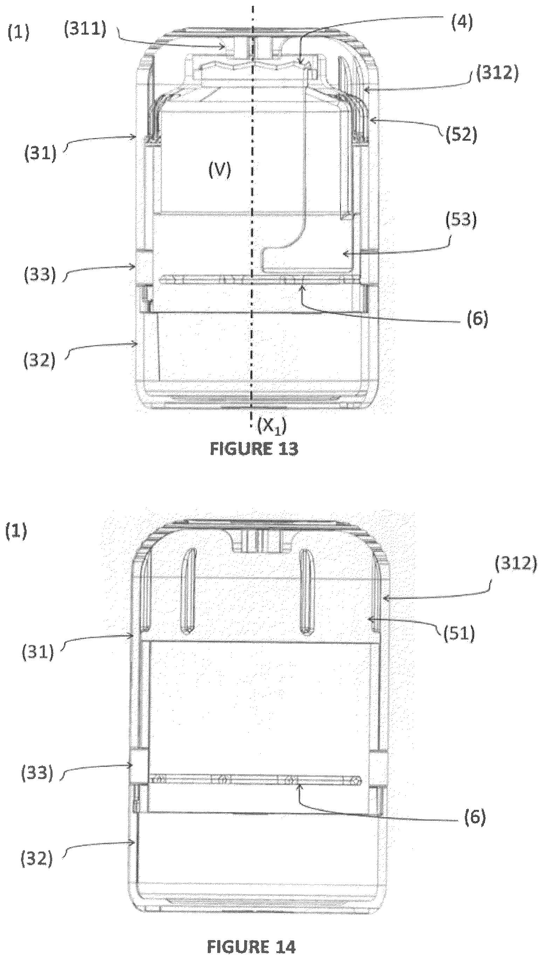

Figures 11 and 14 particularly represent the main components of an embodiment of apparatus (1) according to the invention.

As it can be seen, the operative part (5) comprises a scanning portion (53) which extends into the operative volume (V) downstream of the rupture element (4), and is configured so that it can be rotated in around the central axis (X1) of apparatus, and thereby sweeping the proximity region upstream of the sieve element (6).

This action allows the edible substance (B) that can still be found aggregated to another element contained in the capsule (2), for example of a filter type, to be separated from it and also to fall by the action of gravity to the region of operative volume base (V).

Figures 11 and 14 particularly represent the main components of an embodiment of apparatus (1) according to the invention.

As it can be seen, the operative part (5) comprises a scanning portion (53) which extends into the operative volume (V) downstream of the rupture element (4), and is configured so that it can be rotated in around the central axis (X1) of apparatus, and thereby sweeping the proximity region upstream of the sieve element (6).

Figures 12 and 13 show two embodiments of apparatus (1) in which the compression portion (311) extends to different levels relative to the rupture element (4).

Indeed, and according to tests carried out by the author, it may be advantageous for said compression portion (311) to extend further downstream of the rupture element (4) when the first envelope part (31) is in the closed position (I), in order to generate a greater displacement of the envelope material (A) of the capsule (2), especially if it is metallic, and consequent expulsion of the edible substance out of it.

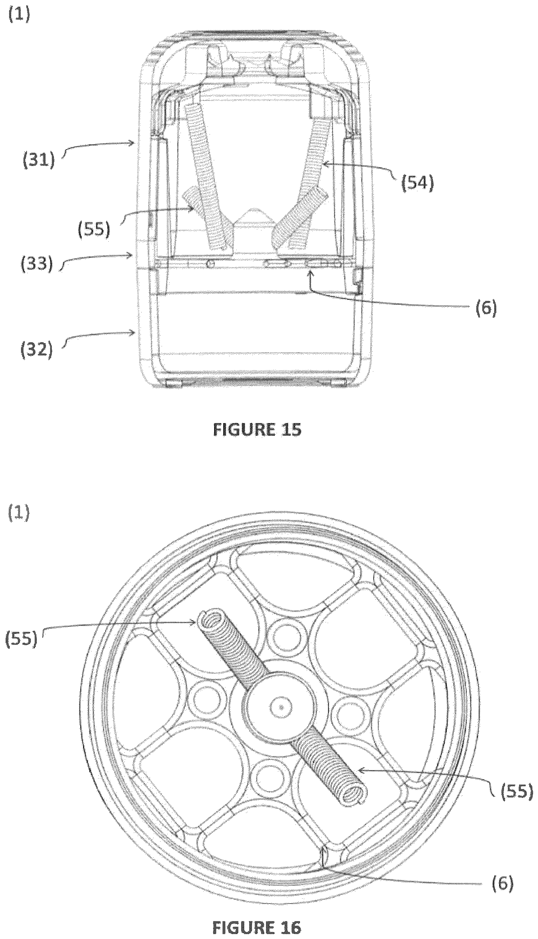

Figures 15 and 16 represent a third embodiment of the apparatus (1) that includes at least a first elastic element (54), preferentially at least one pair of first elastic elements (54) disposed in different directions, for example mutually opposite, and retained by a respective first edge in a non-central region of the operative part (5) and with respective second free edges extending inwards, for example along mutually converging directions, preferentially until the vicinity of a central region of the sieve element (6).

According to a particularly advantageous embodiment, the apparatus (1) can include a second elastic element (55), preferentially at least one pair of second elastic elements (55) disposed in different directions, for example mutually opposite, and retained by a respective first edge in a central region of the sieve element (6) and with respective second free edges extending outwards, for example along mutually diverging directions.

The first and second elastic elements (54, 55) can be provided as helicoid springs retained only by one edge.

According to tests that have been carried out, this disposition with two pairs of elastic elements (54, 55), that can be driven by the user in particular manner by means of the rotation movement of the operative part (5), provided particularly positive results in terms of separation of the different types of contents of the capsule (1).

## Claims

1. Apparatus (1) for separating envelope material (A), edible substance (B), and optionally still other materials, associated with beverage preparation capsules (2) having a central axis (X₂) of capsule,
the apparatus (1) being adapted to process a used capsule (2) and having a reference configuration, so that said unprocessed capsule (2) can be compressed along its central axis (X₂) and the edible substance (B) be thereby expelled out of it,
the apparatus (1) having an envelope (3) configured so as to confine an operative volume (V) extending with a height (H₁) and characteristic width (D₁) at least approximately similar to that of the envelope (3), preferentially with side walls symmetrically rotating relative to the central axis (X₁) of the apparatus,
the envelope (3) comprising a first envelope part (31) in the top region and a second envelope part (32) in the base region of the apparatus (1),
**characterized**
**in that** the first envelope part (31) is configured so that it can be manually manipulated to compress an unprocessed capsule (2) retained in an operative part (5), by means of a linear movement in a direction parallel to the central axis (X₁) and of rotation around it, and mechanically engaged when in a closed position (I) of the apparatus (1).

2. Apparatus according to claim 1, **characterized**
**in that** the first envelope part (31) is configured so that it can be mechanically engaged with another apparatus part (1), preferentially with the operative part (5), so that can be manipulated at least linearly under pressure upon the unused capsule (2), preferentially against a rupture element (4) retained in the operative part (5), and
**in that** the first envelope part (31) is configured so that it can be manually manipulated in rotation around the central axis (X₁) of the apparatus in mechanical engagement with another part of the apparatus (1), preferentially with the operative part (5), and thereby actuate the separation of other material contained inside the capsule (2) besides of the edible substance (B) and presenting passages with a larger characteristic dimension, in particular at least an order of magnitude larger, than the characteristic dimension of the edible substance (B).

3. Apparatus according to claim 1 or 2, **characterized**
**in that** the first envelope part (31) presents a top portion, preferentially concave-shaped of domed type or similar up to a central portion of similar width to that of the capsule (2), and a side portion of tubular shape, configured so that can be placed and moved, preferentially in an engagement of telescopic type, over another part of the apparatus (1) configured correspondingly to a closed position (I), thereby reducing the volume available above the operative part (5), and
**in that** the first envelope part (31) presents a compression portion (311) configured as a projection extending from a central region of the inner surface of the first envelope part (31) and along the central axis (X₁), for example in cylindrical or frusto-conical type shape, with a format different from that of the capsule (2), including with a characteristic width smaller than the characteristic width of the unprocessed capsule (2), and that extends at least approximately up to the level of the top region of the operative part (5), preferentially to underneath the top region of the operative part (5) by means of a placing portion (51) thereof, in the case of the first envelope part (31) in the closed position (I).

4. Apparatus according to claims 1 to 3, **characterized**
**in that** the first envelope portion (31) presents guide means (312), preferentially configured as a plurality of cavities or projections along the inner surface of a side wall thereof, extending along directions parallel to the central axis (X₁) of apparatus, and adapted so that they can engage with corresponding engagement means (52), preferentially configured as projections or cavities, respectively, provided in a lateral portion of the operative part (5), so that the linear and rotational movement of the first envelope part (31) can be transmitted to the operative part (5).

5. Apparatus according to claims 1 to 4, **characterized**
**in that** the first envelope part (31) is configured in the form of a lid that can be removed from the remaining envelope (3) of apparatus (1), thereby providing access to said operative part (5), and which can be placed fitted along the central axis (X₁) of apparatus with an end opening in another envelope part (32, 33), so that the envelope (3) preferentially extends along the entire outer surface of the apparatus (1) devoid of cavities or projections, and
**in that** the second envelope portion (32) includes a base region of the operative volume (V) configured so that it can collect the edible substance (B) which is separated from the envelope material (A) of the capsule (2).

6. Apparatus according to claims 1 to 5, **characterized**
**in that** the first and second envelope parts (31, 32) are configured in the form of a convex shell symmetrically with respect to the central axis (X₁) of the apparatus, preferentially with a cross-section, for example of circular shape, with a width of at least 1.5 times and less than 4 times the width of the unprocessed capsule (2), the first and second envelope parts (31, 32) being configured so that they can confine together at least part of the operating volume (V), and
**in that** the first and second envelope parts (31, 32) are configured so that each can be removably associated with another intermediate part of the apparatus (1), in particular with a third envelope part (33), thereby providing individual access to respective parts of the operating volume (V).

7. Apparatus according to any of claims 2 to 6, **characterized in that** the rupture element (4) is adapted so that can generate mechanical rupture of the envelope material (A) of the capsule (2) in a direction parallel to the central axes (X₁, X₂) of apparatus (1) and of capsule (2) and opposite to the direction of gravity force, thereby generating an opening in the top portion of capsule (2) so that the contents of the capsule (2) can fall downstream, including the edible substance (B) can drop to the base region of the operating volume (V).

8. Apparatus according to any of claims 2 to 7, **characterized in that** the rupture element (4) presents a plurality of intercalated pointed-shaped projections disposed along an alignment, preferably of a diameter corresponding to a diameter of the top surface of a capsule (2), wherein the said rupture element (4) is preferably configured with an annular shape and provided in a metallic material.

9. Apparatus according to any of claims 2 to 8, **characterized in that** the rupture element (4) is retained in the top region of the operative part (5) and adapted so that can be rotated with the operative part (5) around the central axis (X₁) of the apparatus, so that the rupture element (4) can be rotated in the top part of the capsule (2) in a plane generally transverse to the central axis (X), and thereby open and/or remove a portion of the top surface of the capsule (2) so that the content thereof, including the edible substance (B), may fall to the base region of the operating volume (V).

10. Apparatus according to any of claims 1 to 9, **characterized in that** the operative part (5) presents a placing portion (51) in a top region thereof, configured with a circular shape, preferentially with a tubular shape, and for perimeter support of the top surface of a capsule (2) and for retaining a rupture element (4) in a region proximal to the top region, so that a portion of capsule (2) can be ruptured oriented towards the operating volume (V) and so that the edible substance (B) can be collected in a base region of the operating volume (V).

11. Apparatus according to any of claims 1 to 10, **characterized in that** the operative part (5) is adapted so that can be rotated around the central axis (X1) of the apparatus, whereby the operative part (5) is preferentially detachably retained, for example retained by means of a shape fit, in an envelope part (32, 33) and so that it can be rotated therein, and
**in that** the operative part (5) presents a sweeping portion (53; 54, 55) that extends downstream of the placing portion (51) in the operating volume (V) and is configured so that can sweep, in conjunction with the rotation of the operative part (5), in the vicinity upstream of the upwardly oriented surface of a sieve element (6), said sweeping portion (53; 54, 55) preferentially extending transversely to the central axis (X₁) of the apparatus and upstream of the base region of the operative volume (V), and preferentially being configured so that can elastically impinge other elements contained in the capsule (2) of a characteristic dimension greater than the average characteristic dimension of the edible substance (B) .

12. Apparatus according to any one of the preceding claims, **characterized in**
**in that** the apparatus (1) comprises a sieve element (6) provided inside the operating volume (V) downstream of the rupture element (4), and presenting a grid, mesh, or similar, with a characteristic dimension (C) greater than the average characteristic dimension of the edible substance (B), extending in a non-parallel direction, preferentially at least approximately transverse, with respect to the direction of the central axis (X₁) of apparatus.

13. Apparatus according to any one of the preceding claims, **characterized in**
**in that** the apparatus (1) comprises three envelope parts (31, 32, 33) each with a general shell-like shape, and preferentially including a tubular shaped portion, whereby said three envelope parts (31 , 32, 33) are preferentially configured so that they can be successively associated, in particular the first (31) retained so that can rotate freely in the third (33), and the second and third (32, 33) retained with each other in a removable manner, for example by means of a bayonet-type connection, and thereby jointly confine the inner volume (V) with a generally tubular shape having a height (H₁) and a width (D₁), whereby the operating volume (V) is divided by a sieve element (6) retained in the third envelope part (33) so that removal of the first envelope part (31) and of the operative part (5) provides access to the sieve element (6).

14. Process for separating materials associated with a capsule (2),
in particular, to a capsule (2) of coffee or similar edible substances (B) previously used in the preparation of a beverage,
the process comprising the steps:
- providing an apparatus (1) for separating materials including an envelope (3) which confines an operating volume (V) in a closed position (I);
- manipulating a first envelope portion (31) of the envelope (3) so as to provide the apparatus (1) in an open position (I) ;
- placing a capsule (2) on an apparatus portion (1) made accessible in the open position (II), in particular with the top surface of the capsule (2) in a placing portion (51) in the top region of an operative part (5), and so that the central axes (X₁, X₂) of apparatus (1) and capsule (2) are aligned;
- manipulating the first envelope part (31) upon the capsule (2), in particular exerting a pressure thereupon in the direction of the operating volume (V), in particular in a telescopic type movement that can confine the capsule (2) along of a linear extension until the apparatus (1) reaches the closed position (I) in which the envelope (3) extends over the entire outer boundary of the apparatus (1);
- manipulating the apparatus (1) again to an open position (II), so as to be able to withdraw a part of envelope material (A) from the capsule (2);
- removing another envelope part (32, 33) in order to remove the edible substance (B) collected in a base region of the inner volume (V),
whereby the manipulation of the first envelope part (31) corresponds to a movement including a linear component and a rotation component around the central axis (X₁) of the apparatus.

15. Process according to claim 14, **characterized in that** it further includes the steps:
- manipulating the first envelope part (31) and/or the operative part (5) in a rotational movement around the central axis (X1) of the apparatus, so as to move a scanning portion (53) in rotation in proximity to upstream of a sieve element (6);
- removing a second pair of envelope (32) so as to remove the edible substance (B) collected in a base region of the inner volume (V);
- removing the operative part (5) relative to a third envelope part (33) in order to remove other materials collected in the sieve element (6) upstream from the base region of the inner volume (V).
